# EUROPEAN PATENT SPECIFICATION

(11) **EP 2 122 713 B1**
(45) Date of publication and mention of the grant of the patent: **13.01.2016**
(21) Application number: 08702152.3
(22) Date of filing: 05.02.2008
(51) Int. Cl.: H01M 2/10, H01M 2/20, H01M 2/02, H01M 10/44, B62J 7/04, B62M 6/90, H01M 10/02

(54) **BATTERY SYSTEM FOR ELECTRICAL VEHICLE**
BATTERIESYSTEM FÜR EIN ELEKTRISCHES FAHRZEUG
SYSTÈME DE BATTERIES DE VÉHICULE ÉLECTRIQUE

(30) Priority: 05.02.2007 GB 0702155
(43) Date of publication of application: 25.11.2009
(73) Proprietor: Ultima Networks Plc, Harlow Essex CM18 7PN (GB)
(72) Inventor: MUGHAL, Humayun Akhter, Essex CM18 7PN (GB)
(74) Representative: Sanderson & Co.
(86) International application number: PCT/GB2008/050069
(87) International publication number: WO 2008/096169

(56) References cited:
- WO-A-2006/118386
- GB-A- 2 299 701
- JP-A- 2001 122 179
- US-A- 4 347 294

## Description

The present invention relates to a battery system for an electrical vehicle, in particular a modular battery system for an electrically powered or electrically assisted bicycle, or a vehicle that generates electricity as it moves.

Electrically powered vehicles such as bicycles have been provided for some time and these include battery packs to supply electrical power to a motor for use in driving the vehicle. Further, such battery packs may also receive and store power from external charging sources such as the mains or from onboard generator such as a dynamo. Such pre-existing designs of battery however suffer from certain disadvantages. Firstly, the storage capacity of a battery is directly proportional to its overall size/weight - the larger a battery's capacity the greater the size/weight of the battery. However, transporting the weight or volume of a substantial battery can be inefficient if the journey involving that battery does not require as much energy as is stored within the battery. The length of journeys that such electrically powered vehicles might undertake vary and consequently the optimum capacity for a battery (i.e. that which will provide just enough power to complete the journey) cannot be set. Instead, a battery must be provided that is sufficient to provide for the entirety of the longest expected journey. This means that on short journeys an unnecessary weight of battery is transported, decreasing the efficiency of the overall process.

A further disadvantage of conventional batteries is that they are, for the most part, cumbersome and unsightly and do not greatly aid in the overall design of an electrically powered vehicle. It is usually necessary to accommodate the requirements of the battery in some form thus compromising overall on design or aesthetic considerations.

JP2001122179 discloses an electrical vehicle battery system of the prior art.

The present invention has been arrived at as a result of an appreciation that these and other disadvantages associated with the use of electrically powered vehicles can be overcome by utilisation of a significantly improved design of battery system. The present invention aims to provide such an improved battery system.

Therefore according to the present invention there is provided an electrical vehicle battery system comprising a base battery unit having a housing, an electrical storage cell within that housing, mounting means to connect the base unit to the electrical vehicle and to provide electrical power, at least one supplemental battery unit and connection means by which the at least one or more supplemental battery unit may be attached to an upper surface of the base unit to supply electrical current thereto, the at least one or each supplemental battery unit being provided with lower connection means that cooperate with the connection means of the base unit and upper connection means equivalent to the connection means of the base unit so that a supplemental battery unit can be connected on top of another supplemental battery unit or the base unit, and wherein a load bearing surface is defined by the upper surface of the base unit or by an upper surface of the top supplemental battery unit of the battery system thereby to support cargo on the vehicle.

The term cargo as used herein implies any item that might be carried on the vehicle from a small personal item that a user of the vehicle requires, such as a bag or box when the vehicle is a bicycle, to large items that are being transported. The term electrical vehicle includes any vehicle that includes a battery either to power locomotion or other functions. It also includes any vehicle that includes a battery to collect and store electrical energy generated by motion of the vehicle. The present invention is particularly well suited to use in the electrical vehicle energy capture system that is the subject of our copending UK Patent application no. GB0623457.9.

The load bearing surface is defined by the upper surface of the base unit or by an upper surface of the top supplemental battery unit of one or more fixed on top the base unit in a stack. This load bearing surface may adopt a variety of orientations, but preferably is generally horizontal so that cargo may be supported resting on the surface with the optional use of other restraining members to hold it thereon.

The battery system is to be mounted on a vehicle and needs to be connected thereto. The connection of the base unit to the vehicle could be permanent, for example it could be integrated during manufacture of the vehicle. Alternatively the battery system could be for retrospective fitting to the vehicle. Preferably the mounting means comprise fixings to connect the base unit to a frame of the vehicle. Such fixings should connect the base unit so that it is secure and so that the upper surface may receive one or more supplemental battery unit.

The base unit and supplemental battery units are configured such that a stack of many supplemental battery units can be carried on top of the base unit. However as a stack becomes higher it can get unwieldy so in practice it would not normally be stacked too high.

The connection means include pairs of mating electrical contacts to electrically interconnect the base unit and a supplemental battery unit, or two supplemental battery units. The electrical interconnection can be achieved by the same mechanism and at the same time as the mechanical connection of supplemental battery unit to base unit or connection of supplemental battery unit to a different supplemental battery unit. The connection means include a releasable fastening mechanism so that the or each supplemental battery units may be selectively connected to and removed from the base battery unit by a simple quick release mechanism.

Preferably each supplemental battery unit connects to another unit by a sliding engagement where it is located on the other unit offset laterally or longitudinally by an amount and then slid into place thereby engaging the electrical and mechanical connection means. A catch mechanism may be provided to prevent opposite sliding until disconnection is desired.

The vehicle is preferably an electrically powered, electrically assisted or electricity generating bicycle and the base unit may be connected to the rear of the bicycle above a rear wheel thereof. In such an arrangement the load bearing surface defined by the base unit or supplemental battery units may provide a rack above the rear wheel akin to a pannier rack.

The battery system may be provided with a lock mechanism to prevent unauthorised removal of the base unit from the vehicle and/or supplemental battery units from the base. The battery system may have a variety of further features as the skilled man would appreciate for its function as a source or store for electrical energy. Such features could include a power input jack to receive electrical current from an external charging source, a power level indicator and the like.

In order that it may be better understood, but by way of example only, one embodiment of the present invention will now be described in detail with reference to the accompanying drawings in which:
**Figure 1** is a perspective view of a battery base unit;
**Figure 2** is a perspective view of a supplemental battery unit;
**Figure 3** shows an enlarged corner region of the supplemental battery unit;
**Figure 4** shows an alternative perspective view of the same corner region of the supplemental battery unit;
**Figure 5** shows a cross-section through the corner region of the supplemental battery unit depicting the electrical connectors;

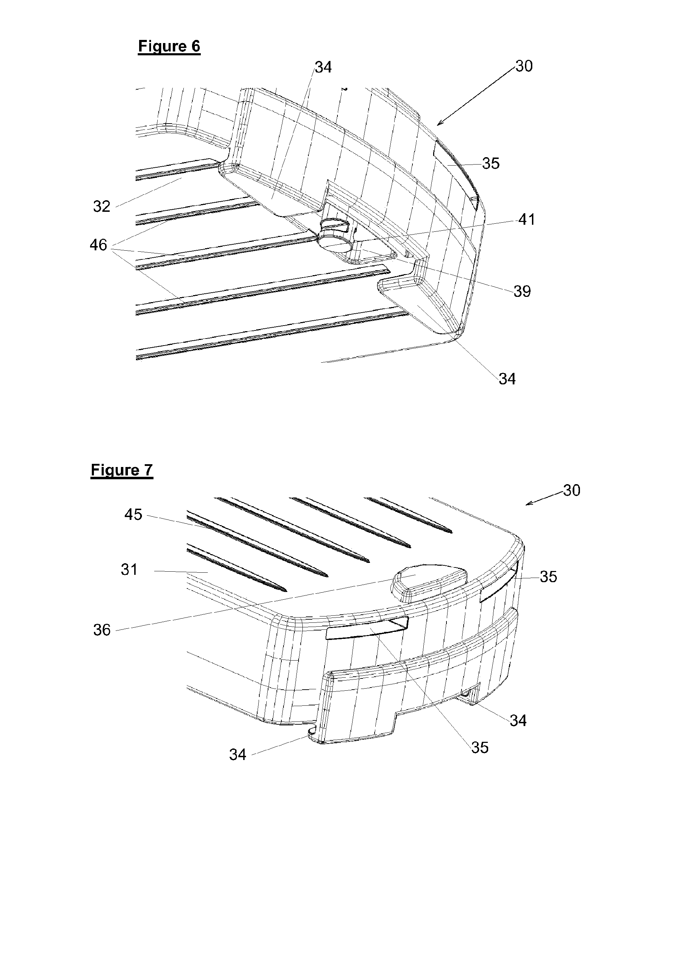

**Figure 6** shows an underside perspective view of an opposite end of a supplemental battery unit;
**Figure 7** shows a perspective view from above of that other end of the supplemental battery unit.
**Figure 8** shows a supplemental battery unit connected to the base unit; and,
**Figure 9** shows two supplemental battery units connected to a base unit.

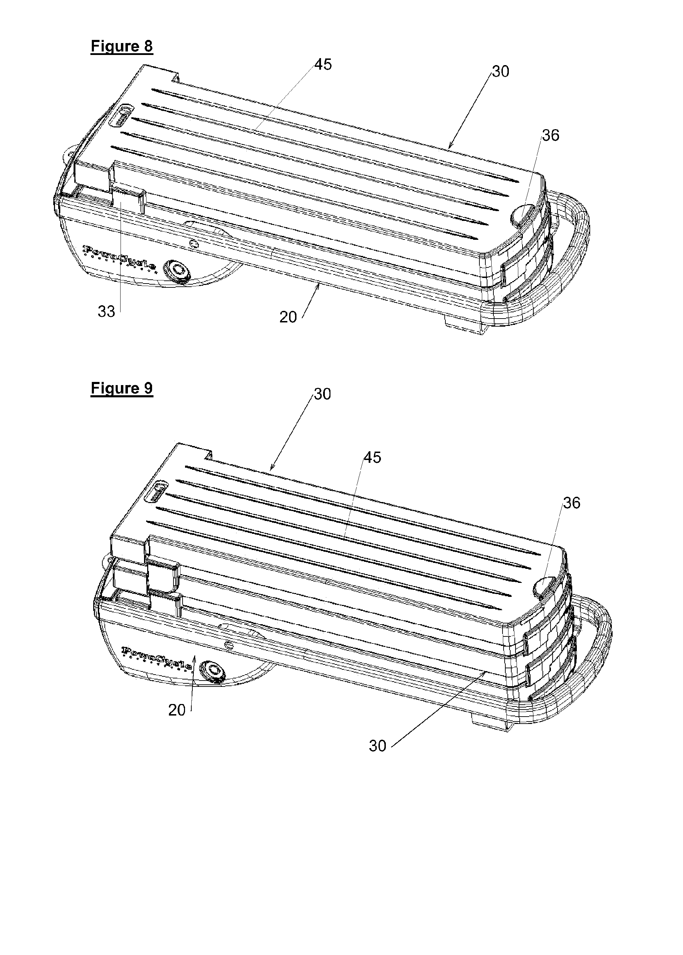

Referring to all of the Figures, there is shown a battery base unit generally indicated 20 forming part of one possible embodiment of battery system according to the present invention (Figures 8 and 9). The base unit 20 has a generally flat upper surface 21 which defines a load carrying area. Contained within the base unit 20 is an electrical storage battery or cell (not shown) and the base unit 20 is adapted to be mounted on a vehicle in electrical connection with an electrical system thereon. In this embodiment the vehicle to which it is to be mounted is a bicycle (not shown) and the base unit would be mounted using fixing points 22 and 23. This embodiment of base unit 20 would be located above the rear wheel of the bicycle and would connect onto a pannier rack mechanism thereon. Alternatively, the device can be connected to the frame of the bicycle to define the pannier rack, but additional supports might be required for an outer end (i.e. that furthest from the frame).

There is a handle 25 at the outer end of the base unit. Towards the other end of the base unit there are provided two slots 26 on opposed edges, and these are for the connection of supplemental battery units. Although not visible in the drawings, electrical contacts (in the form of electrical sockets) are provided within lateral recesses in these slots 26 to connect with electrical contacts on the supplemental battery units.

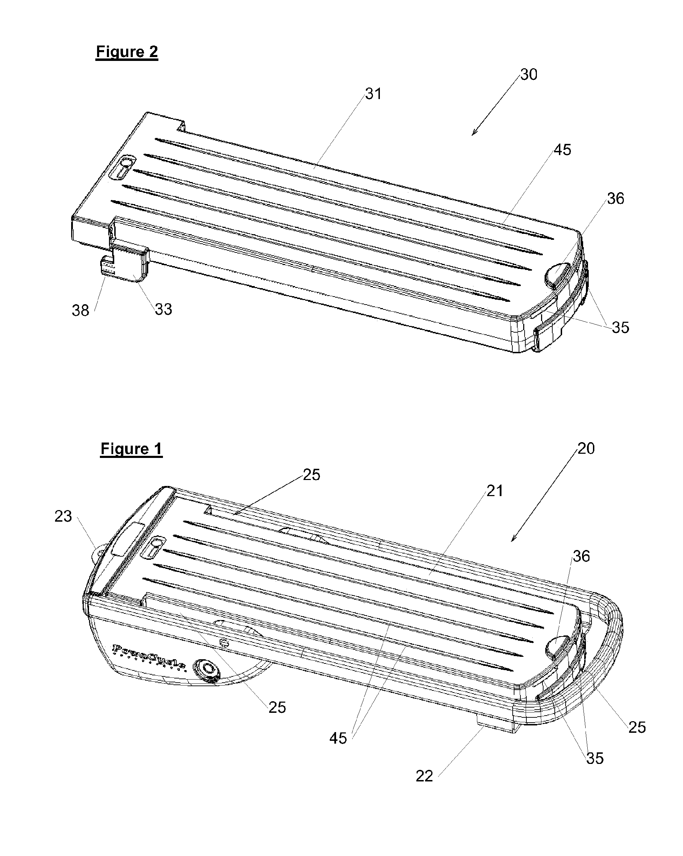

Figure 2 shows a supplemental battery unit generally indicated 30, which has a generally flat upper surface 31, and a generally flat lower surface 32 (visible in other Figures) and contains additional electrical storage cells. The supplemental battery unit 30 is adapted to connect to the base unit 20 over the upper surface 21 thereof. Such connection will be both mechanical to ensure the supplemental battery unit does not detach in normal use but also electrical to ensure that electrical cells provided within the supplemental battery unit 30 are able to supply power to the base unit 21 and onward to the electrical vehicle. If of course the battery system is collecting power the flow of energy would be in the opposite direction.

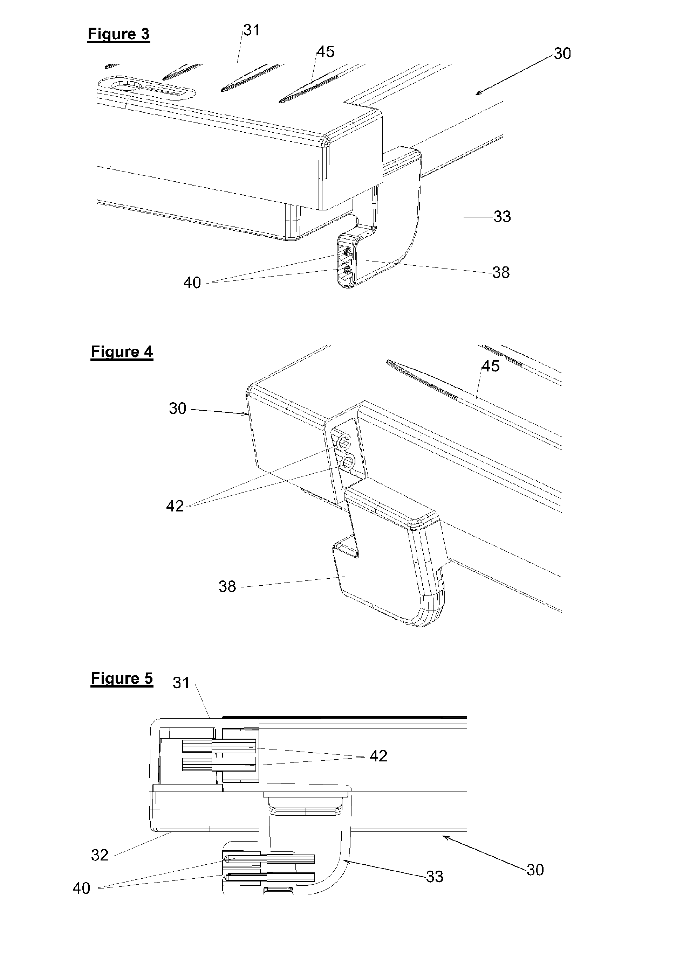

The supplemental battery unit has on each side a connector leg 33 with a laterally extending foot 38. This connector leg depends below the lower surface 32 of the supplemental battery unit 30 and, as can better be seen in Figures 3 to 5, includes electrical contacts therein in the form of two connector pins 40. The connector leg 33 on the opposite side may be identical or may omit the connector pins. The dependent contact legs 33 each engage in a slot 26 on the base unit, with the feet 38 engaging in the recesses in each slot which are appropriately configured. Female connector sockets are provided in the recesses.

The supplemental battery is also adapted to allow the connection of a supplemental battery unit on top. Therefore above each connector leg 33 there is provided a female input connector adapted to receive the foot of a connector leg of an equivalent supplemental battery unit. At least one of these will have sockets 42 into which the male connector pins 40 on an adjacent unit will engage. Although not shown in the cross-sectional view of Figure 5, the electrical connector pins 40 and sockets 42 are wired to the electrical storage cells housed within the main body of the supplemental battery unit.

The connector legs 33 are generally at one end of the supplemental battery unit 30. At the opposed end there are provided two hooks 34 that extend below the lower edge of the supplemental battery unit. These hooks 34 are adapted, when the supplemental battery unit is connected to a base unit or to a different supplemental unit, to engage in matching channels 35 which are provided on the other unit. Equivalent channels 35 can be seen on the base unit 20 and also on the supplemental battery unit 30 above the hooks 34.

A spring loaded button 36 is provided on the base unit 20 and each supplemental battery unit 30. This is adapted to extend from the upper surface 31 and engage in a depression 39 on the lower surface 32 of a supplemental battery unit to prevent sliding. The button also activates a release mechanism.

To connect a supplemental battery unit 30 to a base unit 20 the connection legs 33 of the supplemental battery unit 30 are located vertically into the slots 26. In this position the supplemental battery unit is lying on and parallel to the base unit 20 but is displaced longitudinally towards the outer (handle) end of the base unit. The supplemental battery unit may then be slid away from the handle end such that the hooks 34 engage into the channels 35 and the connector pins 40 in the connector legs 33 engage with contacts within the recesses 26. Once slid to this position the spring loaded button 36 on the base unit (or on the lowest of a pair of units being interconnected) engages in the depression 39. The supplemental battery unit 30 is now locked in place and prevented from movement in any direction until released.

The button on each supplemental battery unit 30 is linked to a finger 41 that when the button is pressed extends out of the depression 39 either to or beyond the level of the lower surface 32. The finger will depress the button of a unit below it so that that lower button leaves the depression and lateral sliding is permitted so as to disengage the hooks from the channels and the feet from the recesses. Release is achieved by depression of the topmost button to release the one below, so that a reverse process can be followed.

The upper surface 21 of the base unit 20 and the upper surface 31 of each supplemental battery unit 30 are provided with elongate ridges 45. These elongate ridges 45 engage in elongate grooves 46 provided on the lower surface 32 of each supplemental battery unit. The engagement of the ridges 45 in the grooves 46 assists in the correct alignment and linear sliding during engagement and disengagement of units. They also enhance friction for items carried on the load bearing surface.

Figure 8 shows a single supplemental battery unit connected to the top of a base unit. Figure 9 shows two supplemental battery units 30 stacked one on top of each other and connected to the top of the base unit. Clearly many supplemental battery units may be provided on the base unit, and the more there are the greater the capacity of the battery system but the greater the weight. Consequently, the optimum battery capacity can be easily achieved by loading the correct number of supplemental battery units on the base unit. Further, it is possible to add one or more fully charged supplemental battery unit to a base unit that is discharged in order to provide further power as required. This would permit users of electrical vehicles utilising a battery system according to the present invention to swap spent supplemental battery units for fully charged ones at convenient points along their journey. This allows a greater travel distance without the time delay of having to charge the battery on the vehicle on route.

The uppermost surface of the battery system, whether that be the top surface 21 or the upper surface 31 of the uppermost supplemental battery unit provides a load bearing surface upon which items may be carried if required. However, there is no compulsion for the load bearing surface to be used at all.

## Claims

1. An electrical vehicle battery system comprising a battery base unit having a housing, an electrical storage cell within that housing, mounting means to connect the base unit to the electrical vehicle and to provide electrical power, at least one supplemental battery unit and connection means by which the at least one or more supplemental battery unit may be attached to an upper surface of the base unit to supply electrical energy thereto, the at least one or each supplemental battery unit being provided with lower connection means that cooperate with the connection means of the base unit and upper connection means equivalent to the connection means of the base unit so that a supplemental battery unit can be connected on top of another supplemental battery unit or the base unit, and wherein a load bearing surface is defined by the upper surface of the base unit or an upper surface of the top supplemental battery unit of the battery system thereby to support cargo on the vehicle.

2. An electrical vehicle battery system as claimed in claim 1 wherein the mounting means comprise fixings to connect the base unit to a frame of the vehicle.

3. An electrical vehicle battery system as claimed in any of the preceding claims, wherein the connection means include pairs of mating electrical contacts to electrically interconnect the base unit and a supplemental battery unit, or two supplemental battery units.

4. An electrical vehicle battery system as claimed in any of the preceding claims, wherein connection means include a releasable fastening mechanism so that the or each supplemental battery units may be selectively connected to and removed from the base battery unit.

5. An electrical vehicle battery system as claimed in any of the preceding claims wherein the supplemental battery unit engages with the base unit or another supplemental battery unit by sliding.

6. An electrical vehicle battery system as claimed in claim 5, wherein the supplemental battery unit is locked in place by a spring loaded button that engages in a depression on the underside thereof.

7. An electrical vehicle battery system as claimed in any of the preceding claims, wherein the vehicle is a bicycle that is electrically powered, electrically assisted or electricity generating.

8. An electrical vehicle battery system as claimed in claim 7, wherein the base unit is connected to the rear of the bicycle above a rear wheel thereof.

9. An electrical vehicle battery system as claimed in claim 7 or claim 8, wherein the base unit and supplemental battery units if present provide a pannier rack.

10. An electrical vehicle battery system as claimed in any of the preceding claims, which is further provided with a power input jack to receive electrical current from an external charging source.

11. An electrical vehicle battery system as claimed in any of the preceding claims, which is further provided with a lock to prevent unauthorised removal of a supplemental battery unit and/or the base unit from a vehicle.

## Patentansprüche

1. Elektrofahrzeug-Batteriesystem, das eine Batteriebasiseinheit mit einem Gehäuse, eine elektrische Speicherzelle innerhalb des Gehäuses, Montageeinrichtungen, um die Basiseinheit an dem Elektrofahrzeug anzubringen und um elektrische Energie zu liefern, wenigstens eine Zusatzbatterieeinheit und Verbindungseinrichtungen aufweist, mit der die wenigstens eine oder mehrere Zusatzbatterieeinheiten an einer oberen Oberfläche der Basiseinheit angebracht werden können, um dieser elektrische Energie zuzuführen, wobei die wenigstens eine oder mehrere Zusatzbatterieeinheiten mit unteren Verbindungseinrichtungen versehen sind, die mit den Verbindungseinrichtungen der Basiseinheit und oberen Verbindungseinrichtungen zusammenwirken, die äquivalent zu den Verbindungseinrichtungen der Basiseinheit sind, so dass eine Zusatzbatterieeinheit über einer anderen Zusatzbatterieeinheit oder der Basiseinheit angebracht werden kann, und wobei durch die obere Oberfläche der Basiseinheit oder eine obere Oberfläche der obersten Zusatzbatterieeinheit des Batteriesystems eine lasttragende Oberfläche definiert ist, um dadurch Ladung auf dem Fahrzeug zu unterstützen.

2. Elektrofahrzeug-Batteriesystem wie in Anspruch 1 beansprucht, wobei die Montageeinrichtungen Verankerungen aufweisen, um die Basiseinheit an einem Rahmen des Fahrzeugs zu befestigen.

3. Elektrofahrzeug-Batteriesystem wie in einem der vorhergehenden Ansprüche beansprucht, wobei die Verbindungseinrichtungen Paare von zueinanderpassenden elektrischen Kontakten aufweisen, um die Basiseinheit und eine Zusatzbatterieeinheit oder zwei Zusatzbatterieeinheiten elektrisch miteinander zu verbinden.

4. Elektrofahrzeug-Batteriesystem wie in einem der vorhergehenden Ansprüche beansprucht, wobei die Verbindungseinrichtungen einen lösbaren Befestigungsmechanismus umfassen, so dass die oder jede Zusatzbatterieeinheit selektiv mit der Basisbatterieeinheit verbunden oder davon gelöst werden kann.

5. Elektrofahrzeug-Batteriesystem wie in einem der vorhergehenden Ansprüche beansprucht, wobei die Zusatzbatterieeinheit mit der Basiseinheit oder einer anderen Zusatzbatterieeinheit gleitend in Eingriff tritt.

6. Elektrofahrzeug-Batteriesystem wie in Anspruch 5 beansprucht, wobei die Zusatzbatterieeinheit an dem Ort durch einen federvorgespannten Knopf verriegelt wird, der in eine Vertiefung an der Unterseite davon eingreift.

7. Elektrofahrzeug-Batteriesystem wie in einem der vorhergehenden Ansprüche beansprucht, wobei das Fahrzeug ein Fahrrad ist, das elektrisch angetrieben, elektrisch unterstützt ist oder Elektrizität erzeugt.

8. Elektrofahrzeug-Batteriesystem nach Anspruch 7, wobei die Basiseinheit an einem Hinterteil des Fahrrads oberhalb von dessen Hinterrad angebracht ist.

9. Elektrofahrzeug-Batteriesystem wie in Anspruch 7 oder Anspruch 8 beansprucht, wobei die Basiseinheit und die Zusatzbatterieeinheiten, wenn vorhanden, einen Gepäckträger bereitstellen.

10. Elektrofahrzeug-Batteriesystem wie in einem der vorhergehenden Ansprüche beansprucht, das weiter mit einer Energieeingangsbuchse versehen ist, um elektrischen Strom von einer externen Ladequelle aufzunehmen.

11. Elektrofahrzeug-Batteriesystem wie in einem der vorhergehenden Ansprüche beansprucht, das weiter mit einem Schloss versehen ist, um unautorisiertes Entfernen einer Zusatzbatterieeinheit und/oder der Basiseinheit von einem Fahrzeug zu verhindern.

## Revendications

1. Un système de batterie pour véhicule électrique comprenant une unité de base de batterie ayant un logement, une cellule de stockage électrique placée dans le logement, des moyens de montage pour connecter l'unité de base au véhicule électrique et fournir de l'énergie électrique, au moins une unité de batterie supplémentaire et des moyens de connexion par lesquels la au moins une ou plusieurs unités de batterie supplémentaires peut être attachée à une surface supérieure de l'unité de base pour lui fournir de l'énergie électrique, la au moins une ou chacune des unités de batterie supplémentaires étant pourvue de moyens de connexion inférieurs qui coopèrent avec les moyens de connexion de l'unité de base et des moyens de connexion supérieurs qui équivalent aux moyens de connexion de l'unité de base de manière qu'une unité de batterie supplémentaire puisse être connectée en plus d'une autre unité de batterie supplémentaire ou de l'unité de base, et dans lequel une surface porteuse de charge est définie par la surface supérieure de l'unité de base ou la face supérieure de l'unité de batterie supplémentaire supérieure du système de batterie pouvant porter de la cargaison sur le véhicule.

2. Un système de batterie pour véhicule électrique selon la revendication 1 dans lequel le moyen de fixation comprend des fixations pour connecter l'unité de base au châssis du véhicule.

3. Un système de batterie pour véhicule électrique selon l'une quelconque des revendications précédentes, dans lequel les moyens de connexion incluent une paire de contacts électriques d'accouplement pour interconnecter électriquement l'unité de base avec l'unité de batterie supplémentaire, ou deux unités de batterie supplémentaires.

4. Un système de batterie pour véhicule électrique selon l'une quelconque des revendications précédentes, dans lequel les moyens de connexion incluent des moyens de fixation amovibles de manière à ce que la ou chacune des unités de batterie supplémentaires peut être sélectivement connectée ou détachée de l'unité de base de batterie.

5. Un système de batterie pour véhicule électrique selon l'une quelconque des revendications précédentes, dans lequel l'unité de batterie supplémentaire s'emboite par coulissement avec l'unité de base ou une autre unité de batterie supplémentaire.

6. Un système de batterie pour véhicule électrique selon la revendication 5, dans lequel l'unité de batterie supplémentaire est maintenue en place à l'aide d'un bouton à ressort qui s'engage dans une dépression sur sa face inférieure.

7. Un système de batterie pour véhicule électrique selon l'une quelconque des revendications précédentes, dans lequel le véhicule est un vélo électrique, électriquement assisté ou générant de l'électricité.

8. Un système de batterie pour véhicule électrique selon la revendication 7, dans lequel l'unité de base est connectée à l'arrière du vélo au dessus de la roue arrière de celui-ci.

9. Un système de batterie pour véhicule électrique selon la revendication 7 ou 8, dans lequel l'unité de base et l'unité de batterie supplémentaire si elle est présente fournissent un porte-bagage.

10. Un système de batterie pour véhicule électrique selon l'une quelconque des revendications précédentes, qui comprend en outre une prise d'entrée pour recevoir du courant électrique depuis une source de charge externe.

11. Un système de batterie pour véhicule électrique selon l'une quelconque des revendications précédentes, qui comprend en outre une serrure pour empêcher le retrait non-autorisé de l'unité de batterie supplémentaire et/ou de l'unité de base d'un véhicule.
